# EUROPEAN PATENT SPECIFICATION

(11) **EP 0 761 105 B1**
(45) Date of publication and mention of the grant of the patent: **24.04.2002**
(21) Application number: 96112289.2
(22) Date of filing: 30.07.1996
(51) Int. Cl.: A23L 1/308

(54) **Health food containing specific fungi**
Der Gesundheit dienendes Nahrungsmittel, welches spezifische Pilze enthält
Produit alimentaire pour la santé contenant des champignons spécifiques

(30) Priority: 03.08.1995 JP 19835895; 15.05.1996 JP 12009296
(43) Date of publication of application: 12.03.1997
(73) Proprietor: Chiba Machiko Cooking Studio Yugen Kaisha, Sendai, Miyagi (JP)
(72) Inventor: Chiba, Machiko, Aoba-ku, Sendai, Miyagi (JP)
(74) Representative: Glawe, Delfs, Moll & Partner

(56) References cited:
- CN-A- 1 075 090
- US-A- 5 032 415
- PATENT ABSTRACTS OF JAPAN vol. 95, no. 010 & JP-A-07 255414 (NAKAJIYOU:KK), 9 October 1995,
- PATENT ABSTRACTS OF JAPAN vol. 006, no. 044 (C-095), 19 March 1982 & JP-A-56 161319 (SHIN ETSU CHEM CO LTD), 11 December 1981,

## Description

### BACKGROUND OF THE INVENTION

This invention relates to a health food made of a wood ear(Kikurage in Japan), which is a kind of edible mushroom.

Wood ears are fungi (hymenia) that belong to heteromorphic basidiomycetes. They are generally known as edible mushrooms that grow on decayed needle-leaved and broad-leaved trees, especially decayed elders and oaks.

Wood ears are earlobe-shaped and soft in a naturally occurring state. They are therefore called "wooden ears" or "black wooden jellyfish" in Japan or China.

On the other hand, white wood ears are petal-like or cristated mushrooms. Since they are pure white, jellylike mushrooms, Chinese call them "silver ears" and value them as expensive foods and medicines.

Such edible wood ears (black and white wood ears) are usually sold in a dried state for longer shelf life. Before cooking such dried wood ears, they are immersed in water until they soften sufficiently by absorbing water.

Black wood ears that have absorbed water for cooking are moderately hard to bite, while white jew's ears are jellylike. Although they are both tasty, people rarely eat them alone in a large amount.

Wood ears are typically dried in the sun. In order to use such dried wood ears as food, each piece of them has to be sufficiently large so that one can enjoy their crispy taste. Thus, heretofore, no dried wood ears in powder form were used as food.

As a food material, wood ears are low in calorie, rich in calcium, iron, phosphorus, fibers and potassium, and contains an especially large amount of vitamin D. Moreover, dried wood ears can expand in volume up to eight to ten times the original volume by absorbing water. Thus, the present inventor thought that they can be ideal health foods for those who are on a diet.

But some nutrients contained in wood ears, especially calcium, fibers and vitamin D, are easily soluble in water, so that they can be easily lost or diluted while cooking. It is thus difficult to supply sufficient amounts of these nutrients to a dieter's body.

Dried wood ears are relatively hard. If they are taken in powder form, they may damage the gullet or the stomach mucous membrane.

Granulated dried wood ears tend to swell in the mouth by absorbing water such as saliva and turn into large masses. Such masses are difficult to swallow. Also, if grains of wood ears stick to the throat and swell by absorbing water such as saliva, they may clog the throat, causing suffocation. In any case, it is difficult to swallow a predetermined amount of wood ears safely.

If powdered dried wood ears are swallowed down with water or other drinks, a dieter has to take a large amount of drink such as water until he or she feels full. Thus, no efficient dieting is possible. Also, one can easily lose the habit of eating wood ears.

Konnyaku, a kind of devil's-tongue, is popular in Japan as a diet food because of its low calorific value. But it is also low in the contents of nutrients necessary for the body such as calcium, iron and protein. Thus, taking konnyaku alone for a long time is not good for the health of a dieter.

An object of the present invention is to provide a health food which is made from a wood ear, a food material which has not been used effectively as a health food, which can be taken easily and safely in a dried form with a small amount of drink, and which can give the person who takes it the feeling of fullness quickly, while supplying necessary nutrients to the body in a balanced manner, without the possibility of any harmful side effects.

### SUMMARY OF THE INVENTION

CN-A-1075090 discloses a tablet made by mixing an extract made of three ingredients with a powder made of six other ingredients, one of which is tremella which is a mushroom species similar to, but not the same as wood ear. Owing to the mix of ingredients the tablet is a medicine for treating chronic gastritis but is not suitable for use as a health food free of undesired side-effects.

JP-A-7255414 discloses a functional sweetener made by dispersing powdered Jews' ear in a solution of low calorie sweeteners and natural sweeteners and spray drying the dispersion into a granular form. Owing to its nature and form the sweetener is intended to be added to a food or beverage, but not to be eaten directly. Both the granular form and the high contents of sweet substances make it unsuitable for direct consumption as a health food.

US-A-5032415 and JP-A-56161319 each disclose a tablet made from a powder containing a water swellable substance such as cellulose and/or collodial microfibrils or glucomannan, the tablet being intended to swell in the stomoch for imparting a feeling of fullness and reducing the appetite. The use of dried wood ear for a similar purpose is not contemplated in these documents.

According to this invention, there is provided a health food comprising a dried and powdered wood ear sealed in a water-soluble capsule.

From another aspect of the invention, there is provided a health food formed by compressing a powdered wood ear to which is added a binder, into the shape of a tablet.

By taking a large amount of such health food, which contains a dried wood ear, with cold or hot water while the stomach is empty, its volume will increase to eight to ten times the original volume in the stomach, so that the dieter will not feel hungry any more. This makes it possible to prevent any further calorie intake.

Further, wood ears, which are distinguished from "konnyaku" in their rich contents of nutrients that are necessary for the body, can greatly improve the health of those who take them as diet food.

Wood ears are unique in its especially rich contents of calcium and vitamin D. Thus, by taking wood ears, a dieter can assimilate calcium efficiently.

The kind of wood ear which is used in this invention is not limited provided it is edible.

Wood ears which can be used in this invention include, but are not limited to, Auricularia auricula in wood ear order and Tremella fuciformis in white wood ear order.

Raw wood ears are either dried naturally (in the sun) or hot-air dried. If hot-air dried, the vitamin D content will be lost. In contrast, sun-dried wood ears are rich in vitamin D. Thus, they should be sun-dried.

Also, commercially available dried wood ears may be used. But they should be thicker than 300 µm because wood ears 300 µm thick or less do not swell sufficiently. It is preferable to use as thick a dried wood ear as possible so that it will swell sufficiently by absorbing water. A wood ear having hair grown on the back is not desirable because such hair tends to turn into cotton-like shape when pulverized, thus making it difficult to form tablets from the pulverized wood ear.

A dried wood ear is pulverized by a pulverizer such as a roll mill or a high-speed cutter. It is very dangerous to use a home speed cutter, mixer or mill for this purpose because its blade can be easily broken.

It may have any suitable particle size provided it can quickly swell in the stomach. That is, it may be in the form of fine powder, granules or large grains which can be housed in capsules that can be swallowed. For example, it may have an average particle size of 100 µm - 5 mm. A wood ear pulverized to a particle size of about 1-2 mm is preferable because it swells especially remarkably by absorbing water. By sifting the wood ear so that its particle diameter will be within a predetermined range, it is possible to roughly adjust the time taken for the wood ear to swell in the stomach.

The water-soluble capsule used in this invention is is made of a material soluble or degradable in a human stomach and harmless to the human body. Otherwise, it is not limited in material, shape (spherical, oval or cylindrical), and dimensions.

For example, a gelatin-based capsule may be formed by adding water to a gelatin, warming to melt it, adding, optionally, at least one of sugar, glycerin, gum arabic, agar and lecithin in a small amount to provide a thick jellylike mixture, and molding the mixture into a capsule in a warm state.

As capsules for keeping drugs, hard capsules are known which are made of gelatin and degradable in a minute or two after swallowing (available in eight types from type 000 to type 5). The HS capsule health Supplement capsule) made of the same material may be used. Otherwise, such a capsule may be a soft capsule, i.e. a capsule formed by adding gelatin, glycerin or sorbitol to increase plasticity.

The encapsulated health food of dried and powdered wood ear may be taken before meals with water in an amount that may be determined according to the age, weight and dietary habit of each person who takes the health food.

The water-soluble capsule will solve and degrade in the stomach, so that the wood ear inside is quickly exposed and swells in volume to eight to ten times the original dried state, giving the dieter the feeling of fullness. It is thus possible to reduce the food intake thereafter.

When forming a tablet from wood ear, a binder is added to bond the particles of the dried wood ear together so that a tablet can be formed by compression molding. The binder may be one ordinarily used in forming tablets, such as hardened oil, gum arabic, tragacanth gum. An especially good result was obtained by using a vegetable hardened oil.

The content of the binder is not critical. But by adding 2-3 parts by weight of binder for 100 parts by weight dried of wood ear powder, it can be formed into tablets with a tablet machine.

Besides the binder, an excipient may be added in such an amount that it may not be an obstacle in achieving the object of the invention. Such an excipient may be lactase, maltose, saccarose or starch.

The tablet may be formed by pressing with a tablet machine in a manner ordinarily used to form tablets for internal use. The tablet thus formed may be sugar- or ceramic-coated so that it can be swallowed easily.

Wood ears are singularly unique in that, despite their low calorific value, they contain nutrients necessary for the body such as protein, calcium, iron, fiber and vitamin D in a balanced manner. In particular, the content of vitamin D is the highest or the second highest of all the foodstuffs listed in the Japan Food Standard Analysis Table. By using such nutritionally desirable wood ears as a diet food or an ordinary health food, it is possible to greatly improve the health of people, especially old people, without the possibility of any bodily disorder that is often experienced in a diet program using "konnyaku".

As a reference, Table 1 shows the ingredients in 100 g of konnyaku and wood ear (which is an excerpt from Japan Food Standard Analysis Table, 1995 edition).

From this table, one can see that konnyaku contains 97% by weight of (hereinafter simply %) water, with 0.1% protein, 2.2% sugar, 0.1% fiber, 0.3% ash and a trace amount of calcium. But the calcium content originates not from the konnyaku itself but from calcium hydroxide used as a coagulating agent. Moreover, konnyaku contains no vitamin D.

Vitamin D is a nutrient that helps the body absorb calcium. Since konnyaku contains no vitamin D, it is presumed that calcium is absorbed little if konnyaku is taken alone.

In contrast, wood ears (especially black and white wood ears) contains not only calcium but also an extremely large amount of vitamin D. That is, 100 g of wood ear contains 16000 IU (one IU is equal to 0.026 micrograms) of vitamin D. Thus, one can absorb calcium efficiently by taking wood ears alone.

From Table 2, it is apparent that the content of vitamin D of wood ears is even higher than foods in the top of the list in which a food having a higher vitamin D content is placed at a higher level. In fact, wood ears are much higher in the vitamin D content than Cortinellus shiitake, a kind of mushroom, whose vitamin D content is 840 IU. The contents of vitamin D shown in Table 2 were measured by a new analytical method called high-speed liquid chromatography, which was recently developed in the United States, and added to the food ingredient list in 1994 under the guidance of the Welfare Ministry.

As will be apparent from Table 1, water-boiled wood ears are extremely low in the contents of calcium, potassium, iron and fiber compared with dried ones. Thus, a health food made from water-absorbed or cooked wood ears cannot supply enough nutrients to the body. Only the health food made from dried wood ears can efficiently supply enough nutrients to the body.

Wood ears are known to have the function of digesting fibrous substances. Its colloid content adsorbs residual and other substances remaining in the digestive tract and excretes them out of the body, thus cleaning the digestive organs. Also, the colloid swells in the intestines and stimulates intestinal vibration (peristalsis), thus enhancing physiological evacuation. In short, it can prevent constipation. Thus, the health food according to the present invention can be used not only as a diet food but to improve one's health by taking a small amount of it.

Another advantage of wood ears is their high fiber content (74.18%). As shown in Table 3 (an excerpt from Japan Food Standard Analysis Table), wood ears have exceptional high fiber content compared with other foods of the vegetable origin except konnyaku. The fiber contents shown in Table 3 were measured by a new method under the guidance of the Welfare Ministry. Dietary fibers are believed to prevent obesity, increase in blood sugar level, hardening of the arteries and colon cancer.

It was found out that burdocks, sweet potatoes and celery, which had been believed to be rich sources of dietary fibers, actually contained merely 3.58%, 2.32% and 1.93% fibers, respectively.

Vitamin D is a nutrient that involves in the formation of bones by absorbing calcium in the intestines into the bones and controlling the amount of calcium that separates from the bones. Thus, a vitamin D deficiency can lead to osteoporosis. Currently, two osteoporosis preventive drugs, i.e. D2 (ergocalciferol) and D3 (cholecalciferol), are available. They are formed by irradiating, respectively, erogosterol (pro-D2) and 7-dehydrocholesterol (7-DHC pro-D3) with ultraviolet rays.

Besides such clinical drugs, it is possible to treat osteoporosis with a naturally occurring dried, powdered wood ear. As mentioned above, when dried wood ear powder, which contains 16000 IU vitamin D, is immersed in water, its vitamin D content becomes zero. Thus, dried wood ears should be molded into tablets or encapsulated after sterilizing them in a dried state.

Also, 100 g black wood ear contains 44 mg of iron. This value is four times the iron content (13 mg per 100g) of pork liver, which is known to be good for anemia. Moreover, wood ears contain 1.1 mg of vitamin B2 versus 0.16 mg in 100 g unpolished rice.

Among all kinds of foods of the vegetable origin, i.e. foods of the non-animal origin, there are no foods other than wood ears that can supply nutrients necessary for a human body including dietary fiber, iron, calcium, phosphorus, potassium, vitamin B2 and vitamin D. It is thus desirable to use dried wood ears in the form of tablets or capsules as an osteoporosis preventive drug, especially in countries where the population is rapidly aging and as a result, osteoporosis is becoming a major social problem.

### DETAILED DESCRIPTION OF THE PREFERRED EXAMPLES

### (Example 1)

Commercially available dried wood ears were pulverized to a particle size of 20 mesh (0.83 mm) in a roll type pulverizer. After sterilizing, 350 mg of the pulverized wood ear were put in a type 1 gelatin capsule. Gelatin capsules come in various sizes from No. 00 to No. 3. Suitable size may be used in the present invention.

### (Example 2)

Commercially available dried wood ears were pulverized to an average particle diameter of about 1 mm and then sterilized. The wood ears thus obtained as the main ingredient, and the following materials were weighed out in the amounts shown below. These materials except vegetable hardened oil were mixed together.

The mixture obtained was sifted with an 80-mesh (0.175 mm) sieve. The vegetable hardened oil was mixed into the thus sifted mixture of materials. The mixture was then compressed into disks with a tablet machine. By ceramic-coating the disk-shaped materials, tablets each weighing 250 mg were obtained. (composition of each tablet weighing 250 mg ±5%)
(1) powdered wood ears 150.0 mg
(2) crystalline cellulose (ABICELL by Asahi Kasei) 12.5 mg
(3) lactase 37.5 mg
(4) reduced maltose 45.0 mg
(5) vegetable hardened oil using soy bean 5.0 mg

8-10 capsules or tablets of the health food prepared in Example 1 were given to each of five adult males and five adult females. They were swallowed down with 200 cc water 30 minutes before a meal. After taking the health food, they said they felt moderately full. Also, they felt the health food according to the present invention can enhance natural evacuation.

The health food according to the present invention can be taken easily and safely with a small amount of drink. By taking the health food, one can get a feeling of fullness quickly. Also, due to high contents of nutrients necessary for the body, it is possible to reduce the harmful effects of dieting. The colloid and dietary fibers contained in the health food will enhance natural evacuation and prevent osteoporosis.

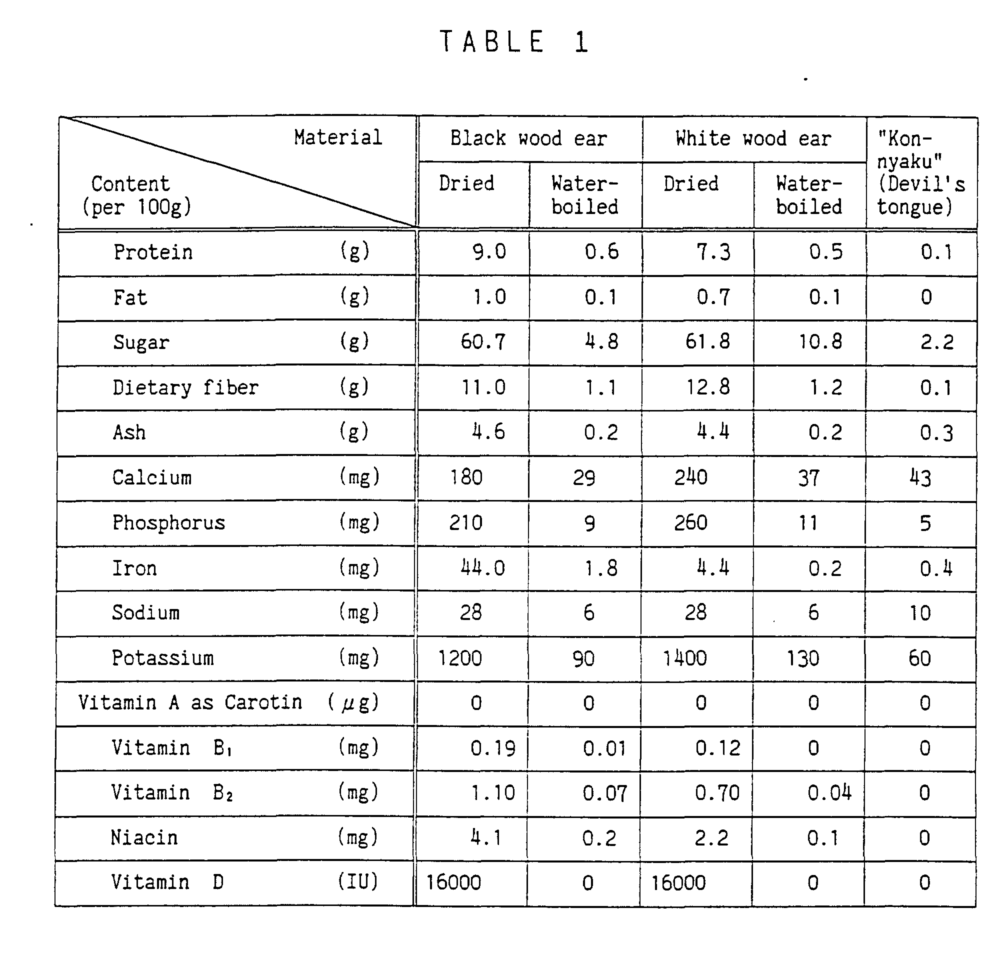

**TABLE 2**

| Ranking of foods having high Vitamin D content | | Content of Vitamin D per 100g (in IU) |
|---|---|---|
| 1 | Wood ear | 16000 |
| 2 | Salted guts of bonito | 4800 |
| 3 | Steamed liver of goosefish | 4400 |
| 4 | Smoked herring | 1900 |
| 5 | Salted salmon | 1600 |
| * | "Hoshi-shiitake" (Dried mushroom) | 840 |

| | | |
|---|---|---|
| * "Hoshi-shiitake" is listed for reference. | | |

**TABLE 3**

| Article of food | Content of dietary fiber (%) |
|---|---|
| "Kanten" (Agar-agar) | 81.29 |
| Wood ear | 74.18 |
| "Hijiki" (Brown algae) | 54.94 |
| "Hoshi-shiitake" (Dried mushroom) | 43.41 |
| "Ao-nori" (Green laver) | 38.62 |
| Burdock | 3.58 |
| Leaf lettuce | 1.14 |
| Celery | 1.93 |
| Tomato | 0.80 |
| Cucumber | 0.85 |
| Cabbage lettuce | 0.96 |

## Claims

1. A health food comprising dried and powdered wood ear sealed in a water-soluble capsule.

2. A health food as claimed in claim 1, wherein said capsule is made of gelatin.

3. A health food formed by compressing a mixture of dried and powdered wood ear and a binder into the shape of a tablet.

## Patentansprüche

1. Der Gesundheit dienendes Nahrungsmittel, umfassend getrockneten und in Pulverform vorliegenden Baumpilz "wood ear", eingeschlossen in einer wasserlöslichen Kapsel.

2. Der Gesundheit dienendes Nahrungsmittel nach Anspruch 1,
bei dem die Kapsel aus Gelatine besteht.

3. Der Gesundheit dienendes Nahrungsmittel, gebildet durch Pressen einer Mischung aus getrocknetem und in Pulverform vorliegendem Baumpilz "wood ear" und einem Bindemittel in die Form einer Tablette.

## Revendications

1. Produit alimentaire pour la santé, comprenant de l'oreille de bois (Kikurage) pulvérisée et scellée dans une capsule soluble dans l'eau.

2. Produit alimentaire selon la revendication 1, dans lequel ladite capsule est en gélatine.

3. Produit alimentaire formé en comprimant un mélange d'oreille de bois séchée et pulvérisée et d'un liant sous la forme d'un comprimé.
